# EUROPÄISCHE PATENTSCHRIFT

(11) **EP 1 222 442 B1**
(45) Veröffentlichungstag und Bekanntmachung des Hinweises auf die Patenterteilung: **05.09.2007**
(21) Anmeldenummer: 00979498.3
(22) Anmeldetag: 16.10.2000
(51) Int. Cl.: G01F 23/26

(54) **KAPAZITIVER SENSOR ZUR DETEKTION DES FÜLLSTANDES EINES MEDIUMS IN EINEM BEHÄLTER**
CAPACITIVE SENSOR FOR DETECTING THE FILLING LEVEL OF A MEDIUM IN A CONTAINER
DETECTEUR CAPACITIF DU NIVEAU DE REMPLISSAGE D'UN MILIEU AU SEIN D'UN CONTENANT

(30) Priorität: 15.10.1999 DE 19949985
(43) Veröffentlichungstag der Anmeldung: 17.07.2002
(73) Patentinhaber: Sie Sensorik Industrie-Elektronik GmbH, 68519 Vierheim (DE)
(72) Erfinder: WINKENS, Frank, 67067 Ludwigshafen (DE); FRANK, Wolfgang, 68519 Viernheim (DE)
(74) Vertreter: Mierswa, Klaus
(86) Internationale Anmeldenummer: PCT/EP2000/010164
(87) Internationale Veröffentlichungsnummer: WO 2001/029520

(56) Entgegenhaltungen:
- DD-A- 221 549
- DE-A- 4 217 305
- US-A- 5 532 527
- US-A- 5 722 290
- US-A- 5 739 598
- TOTH F N ET AL: "A PLANAR CAPACITIVE PRECISION GAUGE FOR LIQUID-LEVEL AND LEAKAGE DETECTION" IEEE TRANSACTIONS ON INSTRUMENTATION AND MEASUREMENT,US,IEEE INC. NEW YORK, Bd. 46, Nr. 2, 1. April 1997 (1997-04-01), Seiten 644-646, XP000197702 ISSN: 0018-9456

## Beschreibung

### Technisches Gebiet:

Die Erfindung betrifft einen kapazitiven Sensor zur Detektion des Füllstandes eines Mediums in einem Behälter mit nichmetallischer Behälterwand, wobei der Behälter mit der Erde bzw. Masse in Verbindung steht, mit einem einen Eingang und einen Ausgang aufweisenden Verstärker, welcher mit einer Rückkopplung versehen ist, weiter umfassend eine Schaltung, die ein Spannungs-Schaltsignal liefert, wenn der Verstärker nicht oszilliert, gemäß dem Oberbegriff des Anspruchs 1 sowie einen kapazitiven Sensor zur Detektion des Füllstandes eines Mediums in einem Behälter mit nichtmetallischer Behälterwand gemäß Anspruch 12.

### Stand der Technik:

Berührungslos arbeitende kapazitive Sensoren zur Erkennung des Füllstandes eines dielekrischen Mediums im Inneren von Behältern mit nichtmetallischen Wänden mittels Elektroden, die außen an dem Behälter angebracht sind, sind bekannt und finden z.B. in der chemischen und pharmazeutischen Industrie, in der Wasseraufbereitung und in der Medizintechnik vielfache Anwendung. Das Funktionsprinzip dieser Sensoren beruht darauf, daß eine Elektrode außen an der Behälterwand in einer bestimmten Höhe angebracht ist. Die Elektrode wird im folgenden "aktive Elektrode" genannt und ist so angeordnet, daß bei Anliegen einer Spannung ein elektrisches Feld zwischen der aktiven Elektrode und Masse entsteht, das im wesentlichen durch den Behälter und das darin enthaltene Medium verläuft. Das Medium kann eine Flüssigkeit oder z.B. auch ein Pulver sein.

Da das Medium, z.B. Wasser oder eine wäßrige Lösung, eine höhere Dielektrizitätskonstante aufweist als Luft, wächst die Kapazität der aktiven Elektrode gegenüber Masse mit zunehmendem Füllstand des Mediums in dem Behälter an. Diese Kapazität wird nachfolgend "aktive Kapazität" genannt.

Mittels einer geeigneten elektronischen Schaltung wird festgestellt, ob die Kapazität zwischen der aktiven Elektrode und Masse einen bestimmten kritischen Wert übersteigt oder nicht. In einer üblichen, dem Stand der Technik entsprechenden Ausführungsform umfaßt eine solche Schaltung einen Verstärker, an dessen Eingang die aktive Elektrode angeschlossen und so positioniert ist, daß der Eingang durch die Kapazität der aktiven Elektrode gegenüber Masse kapazitiv belastet ist. Wird der Behälter mit einem Medium gefüllt, so vergrößert sich die Kapazität der aktiven Elektrode gegenüber Masse, da die Dielektrizitätskonstante aller festen und flüssigen Medien größer ist als diejenige von Luft. Die kapazitive Belastung des Eingangs des Verstärkers wächst also mit dem Füllstand des Mediums im Behälter an.

Der Verstärker ist ferner mit einer Rückkopplung versehen, und der Verstärkungsfaktor des Verstärkers ist so gewählt, daß der Verstärker aufgrund der Rückkopplung oszilliert, solange die den Eingang belastende Kapazität den kritischen Wert nicht übersteigt, wogegen die Oszillation des Verstärkers abbricht und einem Nullsignal weicht, wenn die Kapazität größer ist als dieser kritische Wert oder umgekehrt. Mittels einer geeigneten zusätzlichen Schaltung, in die das Ausgangssignal des Verstärkers eingespeist wird, kann durch das Abbrechen oder Auftreten der Oszillation ein Schaltsignal ausgelöst werden. Typischerweise liegt die Frequenz der Oszillation um 1 MHz.

Die somit gegebene kritische Kapazität, die einer bestimmten kritischen Füllstandshöhe des Mediums im Behälter entspricht, definiert somit den Auslösepunkt des Sensors. Der Wert der kritischen Kapazität kann verändert werden, indem z.B. der Verstärkungsfaktor des Verstärkers verstellt wird. Hierdurch ist der Auslösepunkt des Sensors justierbar.

Ein wesentlicher Nachteil solcher Sensoren besteht darin, daß die aktive Kapazität nicht durch die Dielektrizitätskonstante und den Füllstand des Mediums allein bestimmt ist, sondern zusätzlich auch von den kapazitiven Eigenschaften des Behälters, d.h. von dessen Abmessungen und Form sowie von der Dielektrizitätskonstanten des Behältermaterials beeinflußt wird, da ein Teil der elektrischen Feldlinien zwischen der aktiven Elektrode und Masse die Wand des Behälters, nicht jedoch das Medium selbst durchläuft. Der Behälter wirkt aufgrund dieses Effektes als zusätzliche Kapazität, die sich der Kapazität des Mediums störend überlagert und im folgenden als "Behälter-Eigenkapazität" bezeichnet wird.

Auch derjenige Teil der Feldlinien, der durch das Medium verläuft, durchquert beim Übergang von der aktiven Elektrode zum Medium und beim Übergang vom Medium zur Masse jeweils das Behältermaterial, da die Behälterwand sich zwischen der aktiven Elektrode und dem Medium befindet und der Behälterboden sich zwischen Medium und Masse befindet. Diese Randbedingung äußert sich durch das Auftreten einer weiteren Kapazität, die in Serie mit der Kapazität des Mediums geschaltet ist und im folgenden "Übergangskapazität" genannt wird.

Die aktive Kapazität umfaßt somit drei Einzelkapazitäten, von denen eine im wesentlichen durch Eigenschaften und Füllstand des Mediums bestimmt ist, während die beiden anderen im wesentlichen durch die kapazitiven Eigenschaften des Behälters bestimmt sind.

Durch den Einfluß des Behälters wird somit der Schaltpunkt des Sensors verschoben. Diesem Störeinfluß wird gemäß dem Stand der Technik durch eine entsprechende Justierung des Schaltpunktes Rechnung getragen. Bei Austausch des Behälters gegen einen solchen mit anderen Eigenschaften, z.B. gegen einen solchen aus einem Material mit anderer Dielektrizitätskonstante oder gegen einen solchen mit anderer Wandstärke, muß der Schaltpunkt neu justiert werden.

Ein weiterer erheblicher Nachteil von Sensoren, die dem Stand der Technik entsprechen, wird im folgenden dargestellt. In der Praxis kommt es in vielen Fällen vor, daß das Medium mit Teilen der Innenwände des Behälters selbst in Bereichen, die oberhalb des Füllstandsniveaus legen, in Kontakt kommt und sie dadurch benetzt. Eine solche Benetzung oberhalb der Oberfläche des Mediums kann z.B. durch Schaumbildung, durch aufsteigende Blasen, durch Kapillarwirkung, durch Kondensation oder durch Wellenbildung aufgrund von Erschütterungen oder Rührvorgängen verursacht werden. Des weiteren kann eine solche Benetzung dadurch enstehen, daß das Füllstandsniveau des Mediums im Behälter z.B. durch Entnahme des Mediums abgesenkt wird, wobei an der Innenwand des Behälters eine benetzte Fläche zurückbleibt.

Erfahrungsgemäß kann bereits eine dünne Schicht des Mediums, die z.B durch eine solche Benetzung der Seitenwand oder etwa auch durch die Bildung von Schaum über der Oberfläche des Mediums entsteht, bei Sensoren, die dem Stand der Technik entsprechen, zu erheblichen Fehlfunktionen führen. Die Ursache hierfür besteht darin, daß bereits eine solche dünne Schicht des Mediums einen wesentlichen Beitrag zur Kapazität zwischen Elektrode und Masse liefern kann, so daß der Sensor nicht unterscheiden kann zwischen einer tatsächlichen massiven Füllung des Behälters und einer scheinbaren, durch Benetzung oder Schaumbildung vorgetäuschten Füllung des Behälters. Dieser Umstand kann dazu führen, daß der Sensor auslöst, obwohl die Oberfläche des Mediums das kritische Füllstandsniveau nicht erreicht.

Die Möglichkeit, diese mit Benetzung der Behälterwand und Schaumbildung einhergehenden Probleme durch die Verwendung sehr hoher Oszillationsfrequenzen von typischerweise 50 MHz bis 1 GHz lösen, ist bekannt. Durch die Verwendung einer derart hohen Arbeitsfrequenz kann erreicht werden, daß der Sensor unterscheiden kann zwischen einer massiven und einer scheinbaren, durch Benetzung oder Schaumbildung vorgetäuschten Füllung des Behälters mit dem Medium. Das Betreiben eines Sensors unter sehr hohen Frequenzen bringt jedoch den gravierenden Nachteil mit sich, daß das Auftreten von Reflexionen, stehenden Wellen und anderen Störungen innerhalb des Zuleitungskabels zwischen Oszillator und Elektrode stark begünstigt wird, wodurch die eindeutige Detektion des Füllstandes erschwert und der Schaltpunkt oftmals deutlich verschoben wird. Bei solchen Systemen kann bereits das bloße Berühren des Zuleitungskabels mit der Hand zu einer erheblichen Verschiebung des Schaltpunktes führen.

Ein weiterer Nachteil bei der Verwendung derart hoher Frequenzen betrifft die EMV-Problematik. Da die elektromagnetische Emission mit der Frequenz stark zunimmt, ist die Einhaltung der entsprechenden gesetzlichen EmissionsGrenzwerte bei Verwendung derart hoher Frequenzen schwierig. Darüber hinaus muß das System gemäß EMV-Vorschrift so eingerichtet sein, daß eine elektromagnetische Einstrahlung von außen mit einer Feldstärke von 3 V/m im Frequenzbereich von 80 MHz bis 1 GHz keine Funktionsstörung des Systems verursacht. Auch diese Forderung ist bei Betreiben des Sensors mit den oben genannten sehr hohen Frequenzen nur schwer zu erfüllen.

Derartige Niveauschalter sind zum Beispiel in den Druckschriften DE-A- 42 17 305, DD-A- 221549 sowie DE-A- 44 33 677 beschrieben.

### Technische Aufgabe:

Der vorliegenden Erfindung liegt die Aufgabe zugrunde, einen berührungslos arbeitenden kapazitiven Sensor bereitzustellen, der auslöst, wenn der Füllstand eines Mediums in einem Behälter oberhalb oder auch unterhalb einer bestimmten kritischen Schwelle liegt, wobei der störende Einfluß der kapazitiven Eigenschaften des Behälters zu einem wesentlichen Teil neutralisiert ist; ebenso soll sich der Auslösepunkt des berührungslos arbeitenden kapazitiven Sensors bei einer Benetzung der Behälterinnenwand oder Schaumbildung über der Oberfläche des Mediums nur unwesentlich verschieben.

Diese Aufgabe wird erfindungsgemäß gelöst durch einen kapazitiven Sensor mit einem Verstärker zur Detektion des Füllstandes eines Mediums in einem Behälter mit nichmetallischer Behälterwand, umfassend eine erste Elektrode, die an den Eingang des Verstärkers angeschlossen ist und gegenüber Masse mit einer ersten Kapazität behaftet ist, so daß der Eingang des Verstärkers kapazitiv belastet ist, wobei die Elektrode so angeordnet ist, daß das durch das Spannungssignal zwischen der Elektrode und Masse entstehende elektrische Feld im wesentlichen durch den Behälter und das Medium verläuft, so daß die Größe der ersten Kapazität einerseits mit zunehmendem Füllstand des Mediums in dem Behälter anwächst und andererseits durch die kapazitiven Eigenschaften des Behälters beeinflußt ist, eine zweite Elektrode, die an den Ausgang des Verstärkers angeschlossen ist, und eine dritte Elektrode, die an den Eingang des Verstärkers angeschlossen ist, wobei sich die zweite Elektrode und die dritte Elektrode in einem Abstand zueinander befinden und so positioniert sind, daß zwischen ihnen eine zweite Kapazität besteht, deren Größe wesentlich durch die kapazitiven Eigenschaften des Behälters und nur unwesentlich durch den Füllstand des Mediums im Behälter beeinflußt ist und die eine kapazitive Rückkopplung des Verstärkers darstellt, und ferner umfassend einen Kondensator, der eine dritte Kapazität aufweist, wobei die eine Elektrode des Kondensators an den Ausgang und die andere Elektrode des Kondensators an den Eingang des Verstärkers angeschlossen ist, so daß der Kondensator parallel zu der zweiten Kapazität ebenfalls eine kapazitive Rückkopplung des Verstärkers darstellt, wobei die Kapazität des Kondensators so gewählt ist, daß der Verstärker aufgrund der kapazitiven Rückkopplung nur dann oszilliert, wenn der Füllstand des Mediums im Behälter und damit die erste Kapazität jeweils unterhalb einer bestimmten Schwelle liegen, wobei die zweite Kapazität dem den Eingang des Verstärkers belastenden kapazitiven Einfluß des Behälters entgegenwirkt, so daß der kapazitive Einfluß des Behälters reduziert ist, und als Verstärker ein solcher mit einem Verstärkungsfaktor größer als 1 verwendet wird.

In einer weiteren bevorzugten Ausgestaltung der Erfindung wird als Verstärker ein Verstärker mit einer solchen Eigenfrequenz verwendet, daß die Belastung des Eingangs des Verstärkers durch den ohmschen und kapazitiven Widerstand zwischen der Elektrode und Masse so beeinflußt ist, daß der Verstärker oszilliert, wenn der Füllstand des Mediums in dem Behälter unterhalb einer vorgegebenen Schwelle liegt und die Innenseite der Wand des Behälters oberhalb der Oberfläche des Mediums bzw. oberhalb der Schwelle mit einer Schicht des Mediums behaftet ist oder wenn oberhalb der Oberfläche des Mediums Schaum vorliegt. Andererseits wird die Belastung des Eingangs des Verstärkers so beeinflusst, dass die Störungen, die durch das Auftreten von Reflexionen, stehenden Wellen und anderen Einflüssen innerhalb des Zuleitungskabels zwischen Oszillator und Elektrode verursacht werden, unerheblich sind und die geltenden EMV-Vorschriften eingehalten werden. In höchst vorteilhafter Weise ist dann eine Benetzung der Behälterinnenwand oder Schaumbildung über der Oberfläche des Mediums als solche zu erkennen und von einer tatsächlichen, massiven Füllung des Behälters zu unterscheiden.

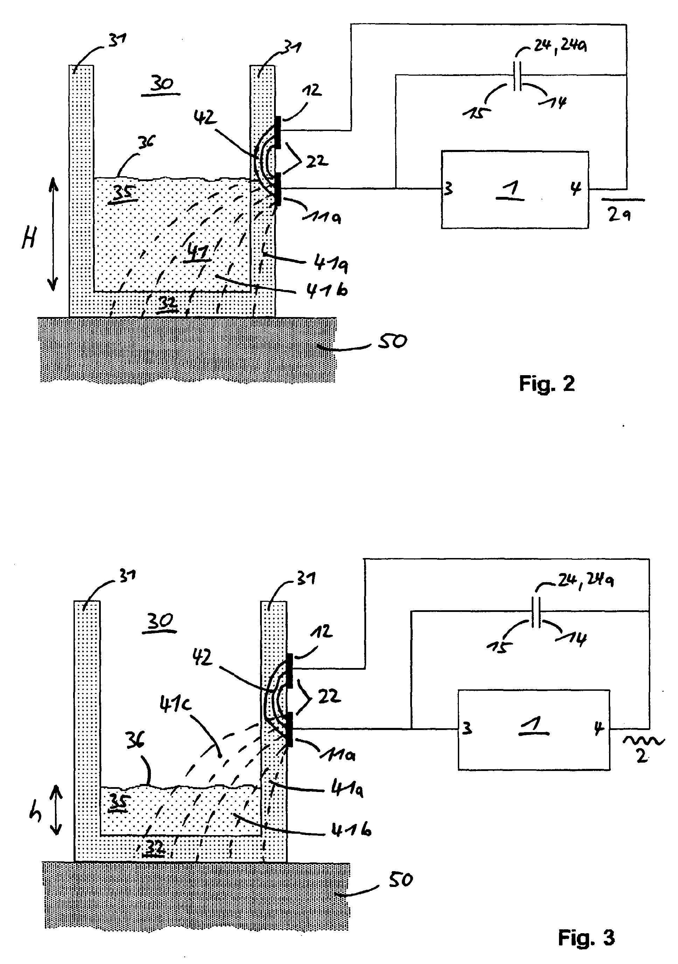

Entscheidend ist somit die Wahl der Arbeitsfrequenz. Durch eine höhere Arbeitsfrequenz als in der herkömmlichen Sensorik üblich, kann der kapazitive Blindwiderstand zwischen den Elektroden und dem Medium reduziert werden. Dieser Blindwiderstand der Ankopplung an das Medium wird nun deutlich kleiner als der reelle Widerstand feuchter Anhaftungen und Schäume. Somit kann der Sensor berührungslos durch die Behälterwand, in einem gewissen Umfang, auch den Leitwert des dahinter befindlichen Mediums auswerten. Dünne Wasserfilme und Schäume bewirken gemäß der Strömungsfeldtheorie eine höhere Stromdichte und somit einen wesentlich geringeren Leitwert als das kompakte Medium. Somit wird eine Unterscheidung zwischen einem vollen Gefäß und dünnen Wasserfilmen möglich, welche durch Betauung oder anhaftende, schäumende Medien entstehen. Die Kompensationselektrode, in den Figuren 2 oder 3 die Elektrode 12, greift in diesen Prozeß unterstützend ein. In der herkömmlichen Sensorik sind die Arbeitsfrequenzen deutlich niedriger gewählt und deshalb sind die kapazitiven Blindwiderstände der Kopplung zum Medium höher als die reellen Widerstände von Anhaftungen. Für den Stand der Technik stellen deshalb ein volles Gefäß und eine Anhaftung immer einen "Kurzschluß" gegen Erde dar und können nicht unterschieden werden.

Bei einem erfindungsgemäßen Sensor erfolgt die Rückkopplung durch zwei parallel geschaltete Kapazitäten. Die eine dieser Kapazitäten wird durch einen Kondensator von konstanter, vom Füllstand des Mediums im Behälter und von den kapazitiven Eigenschaften des Behälters unabhängigen Kapazität gebildet und im folgenden "feste Rückkopplungs-Kapazität" genannt. Dieser Kondensator hat die Aufgabe, ein Oszillieren des Verstärkers immer dann zu gewährleisten, wenn die kapazitive Belastung des Eingangs unterhalb der kritischen Füllstandshöhe liegt.

Die andere dieser Kapazitäten wird durch zwei Elektroden gebildet, die so positioniert sind, daß die zwischen ihnen bestehende Kapazität, die im folgenden "Kompensations-Kapazität" genannt wird, wesentlich durch Eigenschaften des Behälters bestimmt ist. Dies wird vorteilhaft dadurch erreicht, daß beide Elektroden in einem Abstand zueinander nahe an der Behälterwand angebracht und so ausgerichtet sind, daß das zwischen beiden Elektroden verlaufende elektrische Feld zu einem wesentlichen Teil im Inneren der Behälterwand verläuft. Diejenige dieser beiden Elektroden, die an den Ausgang des Verstärkers angeschlossen ist, wird im folgenden Kompensations-Elektrode genannt. Bei gegebener Oszillationsfrequenz des Verstärkers ist die Rückkopplung um so intensiver, je größer die Kompensations-Kapazität ist.

Erfindungsgemäß üben die kapazitiven Eigenschaften des Behälters somit zwei gegenläufige Einflüsse auf die Größe des Eingangssignals des Verstärkers aus:

Einerseits erhöhen die kapazitiven Eigenschaften des Behälters die aktive Kapazität, was den Ausgang des Verstärkers kapazitiv belastet und das Eingangssignal des Verstärkers verkleinert. Andererseits verstärken die kapazitiven Eigenschaften des Behälters die kapazitive Rückkopplung des Verstärkers, was das Eingangssignal vergrößert.

Diese gegenläufigen Wirkungen neutralisieren sich zumindest teilweise gegenseitig. Durch geeignete Wahl des Anbringungsortes und der Abmessungen der betreffenden Elektroden läßt es sich erreichen, daß sich diese Wirkungen näherungsweise gegenseitig aufheben. In diesem Fall ist der Einfluß kapazitiven Eigenschaften des Behälters auf den Schaltpunkt des Sensors weitgehend eliminiert. Eine Neujustierung des Sensors bei Verwendung eines Behälters mit anderen kapazitiven Eigenschaften, z.B. eines Behälters aus einem anderen Material oder mit anderer Wandstärke, kann somit in sehr vielen Fällen entfallen, was für zahlreiche Anwendungen einen erheblichen Vorteil darstellt. Die Verwendung von Behältern mit sehr großer Wandstärke, die z.B. aus Gründen der Wärmedämmung zweckmäßig sein kann, wird für viele Anwendungen erst bei Einsatz eines erfindungsgemäßen Sensors sinnvoll.

Einen weiteren Vorteil bringt der Umstand mit sich, daß der Auslösepunkt eines erfindungsgemäßen Sensors nicht nur bei Austausch eines Behälters gegen einen solchen mit anderen kapazitiven Eigenschaften weitgehend stabil bleibt, sondern auch dann, wenn sich die kapazitiven Eigenschaften ein- und desselben Behälters während des Betriebes des Sensors verändern. Dies kann z.B. dann der Fall sein, wenn eine heiße Flüssigkeit in den Behälter eingefüllt wird, die sich anschließend abkühlt. Aufgrund von Temperaturänderung verändert sich die Dielektrizitätskonstante des Behältermaterials und damit der kapazitive Einfluß des Behälters. Bei Verwendung eines Sensors, der dem Stand der Technik entspricht, wird der Auslösepunkt daher mit einer Temperaturdrift behaftet sein, der oftmals mit entsprechenden Neujustierungen des Schaltpunktes begegnet werden muß. Bei Einsatz eines erfindungsgemäßen Sensors hingegen kann dieser Aufwand in vielen Fällen entfallen, da hier der Auslösepunkt gegenüber dem kapazitiven Einfluß des Behälters und damit auch gegenüber einer Änderung dieses Einflusses stabilisiert ist.

Ein erfindungsgemäßer Sensor unterscheidet sich von einem dem Stand der Technik entsprechenden Sensor auch durch seine Arbeitsfrequenz, d.h. die Frequenz, mit der der Verstärker oszilliert, wenn der Füllstand des Mediums im Behälter unterhalb des kritischen Füllstandes liegt.

Wie vorstehend erwähnt, weisen herkömmliche Sensoren eine Arbeitsfrequenz auf, die mit typischerweise 100 kHz bis cirka 1,5 MHz so niedrig ist, daß bei Vorliegen einer Benetzung der Behälterinnenwand oder bei Schaumbildung über der Oberfläche des Mediums erhebliche Fehlmessungen resultieren können, wobei dieses Problem durch die Verwendung sehr hoher Oszillationsfrequenzen von typischerweise 50 MHz bis 1 GHz gelöst werden kann, was jedoch andere wesentliche Nachteile mit sich bringt.

Im Rahmen der vorliegenden Erfindung wurde herausgefunden, daß diese Nachteile bei Verwendung einer Arbeitsfrequenz im Bereich von ca. 4 MHz bis ca. 10 MHz weitgehend eliminiert sind, während der wesentliche Vorteil, daß eine Benetzung der Behälterinnenwand oder Schaumbildung über der Oberfläche des Mediums aufgrund ihrer Leitfähigkeit als solche erkannt und von einer tatsächlichen, massiven Füllung des Behälters unterschieden werden können, dennoch erhalten bleibt. Ein erfindungsgemäßer Sensor ist demnach in der Lage, durch Wahl der Arbeitsfrequenz im Bereich zwischen ca. 4 MHz und ca. 10 MHz gleichzeitig die kapazitiven Eigenschaften und die Leitfähigkeit des Mediums zur Detektion des Füllstandes auszunutzen.

Die Fähigkeit eines erfindungsgemäßen Sensors, eine Benetzung der Behälterinnenwand oder Schaumbildung über der Oberfläche des Mediums aufgrund ihrer Leitfähigkeit als solche zu erkennen und von einer tatsächlichen, massiven Füllung des Behälters zu unterscheiden, beruht auf dem nachfolgend erläuterten Prinzip. Wenn der tatsächliche, massive Füllstand des Mediums unterhalb des kritischen Füllstandes liegt und oberhalb der Oberfläche des Mediums eine Benetzung der Behälterinnenwand oder Schaumbildung vorliegt, dann stellt der dünne Flüssigkeitsfilm einen Widerstand dar, der in erster Näherung nicht von der Frequenz abhängt und der zwischen die Übergangskapazität und die Kapazität des Mediums geschaltet ist. Der Flüssigkeitsfilm wirkt somit als ohmscher Widerstand zwischen zwei kapazitiven Widerständen. Der Eingang des Verstärkers wird durch den Summenwert dieser drei Widerstands-Komponenten belastet.

Bei Verwendung einer niedrigen Arbeitsfrequenz sind diese kapazitiven Widerstände sehr hoch, da sich der kapazitive Widerstand umgekehrt proportional zur Frequenz verhält. Der ohmsche Widerstand liefert daher in diesem Fall nur einen relativ geringen Beitrag zur Widerstandssumme, d.h. der Flüssigkeitsfilm spielt für die Belastung des Eingangs des Verstärkers nur eine untergeordnete Rolle. Für die Widerstandssumme und damit für die Auslösung des Sensors ist es daher unerheblich, ob eine tatsächliche massive oder eine scheinbare, durch Benetzung oder Schaum vorgetäuschte Füllung des Behälters mit dem Medium vorliegt.

Bei Verwendung einer sehr hohen Arbeitsfrequenz hingegen sind diese kapazitiven Widerstände sehr niedrig. Der ohmsche Widerstand liefert daher in diesem Fall einen relativ großen Beitrag zur Widerstandssumme, d.h. der Flüssigkeitsfilm spielt für die Belastung des Eingangs des Verstärkers eine wesentliche Rolle. Für die Widerstandssumme und damit für die Auslösung des Sensors ist es daher entscheidend, ob eine tatsächliche massive Füllung des Behälters (niedriger ohmscher Widerstand, Sensor löst aus) oder eine scheinbare, durch Benetzung oder Schaum vorgetäuschte Füllung des Behälters (hoher ohmscher Widerstand, Sensor löst nicht aus) vorliegt.

In einer weiteren erfindungsgemäß bevorzugten Ausgestaltung des Sensors besteht eine Elektrode des Sensors aus einer Mehrzahl von miteinander verbundenden Elektroden. Vorzugsweise ist dabei mindestens eine Elektrode im Inneren des Behälters angeordnet und taucht bei Überschreiten eines bestimmten Füllstandes in das Medium ein.

In einer weiteren Ausgestaltung des Sensors fallen die erste Elektrode und die dritte Elektrode zusammen und bilden somit eine erste kombinierte Elektrode. Oder die erste Elektrode und die verstärkereingangsseitige Elektrode des Kondensators können zusammenfallen und somit eine kombinierte Elektrode bilden. Gleichermaßen ist es möglich, daß die erste Elektrode, die dritte Elektrode und die verstärkereingangsseitige Elektrode des Kondensators zusammenfallen und somit eine zweite kombinierte Elektrode bilden. In einer weiteren Ausführungsform kann die zweite Elektrode und die verstärkerausgangsseitige Elektrode des Kondensators zusammenfallen und somit eine dritte kombinierte Elektrode bilden. In einer weiteren Ausführungsform können die erste kombinierte Elektrode und die zweite kombinierte Elektrode mechanisch starr miteinander verbunden sein. In einer weiteren Ausgestaltung der Erfindung können die erste kombinierte Elektrode und die zweite kombinierte Elektrode konzentrisch angeordnet sein.

In einer weiteren Ausgestaltung der Erfindung weist die dritte kombinierte Elektrode eine erste Platte und eine ausgesparte zweite Platte auf, die mittels eines Leiters mit der ersten Platte verbunden ist, in einem Abstand von der ersten Platte und konzentrisch zu dieser angeordnet ist, wobei die erste kombinierte Elektrode in einer Ebene mit der ausgesparten zweiten Platte liegt und innerhalb der Aussparung angeordnet ist. Dabei können die erste Platte auf einer Seite einer Leiterplatte und die ausgesparte zweite Platte und die zweite kombinierte Elektrode auf der anderen Seite der Leiterplatte aufgebracht sein.

In einer weiteren Ausgestaltung der Erfindung ist der Sensor Teil einer solchen Schaltung, die ein Schaltsignal liefert, wenn der Verstärker nicht oszilliert.

Kurzbeschreibung der Zeichnung, in der zeigen:
- Fig.: 1 ein Prinzipschaltbild eines erfindungsgemäßen Sensors mit den für seine Funktion maßgeblichen Kapazitäten,
- Fig. 2: eine schematische Skizze einer Ausführungsform eines erfindungsgemäßen Sensors und den Verlauf der elektrischen Felder bei einem Füllstand, der höher ist als der kritische Füllstand,
- Fig.3: eine schematische Skizze einer Ausführungsform eines eines erfindungsgemäßen Sensors und den Verlauf der elektrischen Felder bei einem Füllstand, der niedriger ist als der kritische Füllstand,
- Fig. 4: eine Querschnittsansicht des Behälters, an dessen Innenwänden eine Schicht des Mediums anhaftet,
- Fig. 5: eine Querschnittsansicht einer bevorzugten Anordnung der Elektroden,
- Fig. 6: eine Frontalansicht einer bevorzugten Anordnung der Elektroden,
- Fig. 7: eine Frontalansicht einer anderen Anordnung der Elektroden, und
- Fig. 8: eine Frontalansicht einer wiederum anderen Anordnung der Elektroden.

### Wege zur Ausführung der Erfindung:

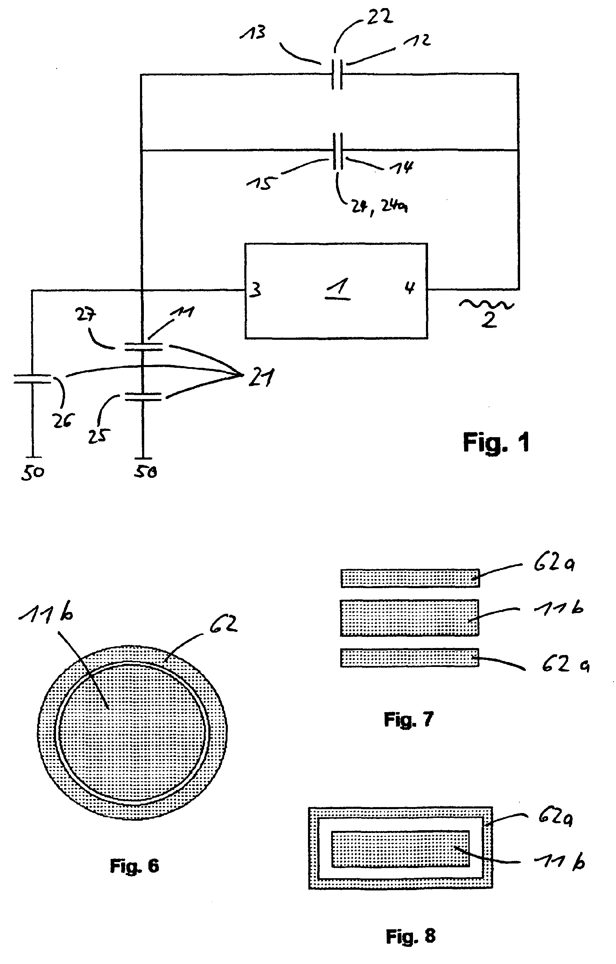

Fig. 1 zeigt ein Prinzipschaltbild eines erfindungsgemäßen Sensors mit den für seine Funktion maßgeblichen Kapazitäten. Der Eingang 3 eines Verstärkers 1 ist mit einer Elektrode 11 verbunden, die die aktive Elektrode des Sensors darstellt. Die aktive Elektrode 11 ist vorzugsweise nahe der Wand 31 an der Außenseite des Behälters 30 und in einer bestimmten Höhe über dem Boden 32 des Behälters 30 angebracht.

Die aktive Elektrode 11 ist gegenüber der Masse 50 mit einer Kapazität 21 behaftet, die sich, wie oben erläutert, aus einer Übergangskapazität 27 und einer mit dieser in Serie wirkenden Kapazität 25 des Mediums 35 sowie einer zu diesen parallel wirkenden Eigenkapazität 26 des Behälters 30 zusammensetzt (Fig. 1). Nur die Kapazität 25 des Mediums 35 ist vom Füllstand abhängig. Wenn der Füllstand steigt, so wächst die Kapazität 25 des Mediums 35 und damit auch die aktive Kapazität 21 an, so daß die kapazitive Belastung am Eingang 3 des Verstärkers 1 vergrößert wird.

Die feste Rückkopplungs-Kapazität 24 wird durch einen Kondensator 24a hergestellt. Sie gewährleistet, daß der Verstärker 1 stets dann oszilliert, wenn der Füllstand im Behälter einen kritischen Wert unterschreitet, der z.B. durch die Wahl des Verstärkungsfaktors beeinflußt werden kann. In einer bevorzugten Ausführungsform wird bei Überschreiten des kritischen Füllstandes mittels einer geeigneten Schaltung, die z.B. einen Gleichrichter, ein Integrationsglied und einen Komparator umfassen kann, ein Schaltsignal ausgelöst.

In einem Abstand von der aktiven Elektrode 11 ist eine Elektrode 12 angebracht, die mit dem Ausgang 4 des Verstärkers 1 verbunden ist und die die Kompensationselektrode des erfindungsgemäßen Sensors darstellt. Sie ist gegenüber einer Elektrode 13, die an den Eingang 3 des Verstärkers 1 angeschlossen ist, mit einer Kapazität 22 behaftet, wobei die Elektroden 12 und 13 so positioniert sind, daß das zwischen ihnen bei Anliegen einer Spannung vorhandene elektrische Feld zu einem wesentlichen Teil durch das Behältermaterial verläuft. Die Kapazität 22 stellt die Kompensations-Kapazität des erfindungsgemäßen Sensors dar. Der Einfluß der Kapazität 22 wirkt dem Einfluß der Behälterkapazität erfindungsgemäß entgegen.

Nun wird auf Fig. 2 und Fig. 3 Bezug genommen, die eine Ausführungsform der Erfindung zeigen, in der die Elektrode 13 vorteilhafterweise mit der aktiven Elektrode 11 zu einer ersten kombinierten Elektrode 11a vereinigt ist, so daß zwischen der ersten kombinierten Elektrode 11a und der Kompensations-Elektrode 12 die Kompensations-Kapazität 22 besteht. Bei Anliegen einer Spannung zwischen diesen beiden Elektroden stellt sich ein elektrisches Feld 42 ein, das im wesentlichen durch die Behälterwand 31 verläuft, so daß die Kompensations-Kapazität 22 erfindungsgemäß von den kapazitiven Eigenschaften des Behälters 30 abhängt.

Der Behälter 30 ist in Fig. 2 bis zu einer Höhe H mit dem Medium 35 gefüllt, die höher ist als die kritische Füllstandshöhe. Fig. 2 zeigt das elektrische Feld 41 (gestrichelt eingezeichnet), das sich in diesem Fall bei Anliegen einer Spannung zwischen der ersten kombinierten Elektrode 11a und Masse 50 einstellt (die Brechung der Feldlinien an Grenzflächen wurde in der Zeichnung nicht berücksichtigt). Ein wesentlicher Teil 41b des elektrischen Feldes 41 durchläuft das Medium 35, wobei dieser Teil des elektrischen Feldes auch die Behälterwand 31 und den Behälterboden 32 durchquert, was mit der Übergangangskapazität 27 in Fig. 1 korrespondiert. Ein anderer Teil 41a des elektrischen Feldes 41 durchläuft das Medium 35 nicht, sondern verläuft im wesentlichen innerhalb der Behälterwand 31, was mit der Behälter-Eigenkapazität 26 in Fig. 1 korrespondiert. Die kapazitive Belastung des Eingangs 3 des Verstärkers 1 ist aufgrund des hohen Füllstandes so groß, daß der Verstärker 1 nicht oszilliert. Am Ausgang 4 des Verstärkers liegt daher ein Nullsignal 2a an.

In Fig. 3 ist der Behälter 30 bis zu einer Höhe h, die geringer als die Höhe H in Fig.2 und geringer als die kritische Füllstandshöhe ist, mit dem Medium 35 gefüllt. Man erkennt, daß ein Teil 41c des elektrischen Feldes 41 (gestrichelt eingezeichnet), das sich in diesem Fall bei Anliegen einer Spannung zwischen der ersten kombinierten Elektrode 11a und Masse 50 einstellt, nicht mehr durch das Medium 35 verläuft, sondern oberhalb der Oberfläche 36 des Mediums 35 durch Luft verläuft, wodurch die aktive Kapazität 21 (Fig. 1) gegenüber dem in Abb. 2 gezeigten Fall reduziert ist. Die kapazitive Belastung des Eingangs 3 des Verstärkers 1 ist aufgrund des niedrigen Füllstandes so niedrig, daß der Verstärker 1 oszilliert. Am Ausgang 4 des Verstärkers liegt daher ein Signal 2 an.

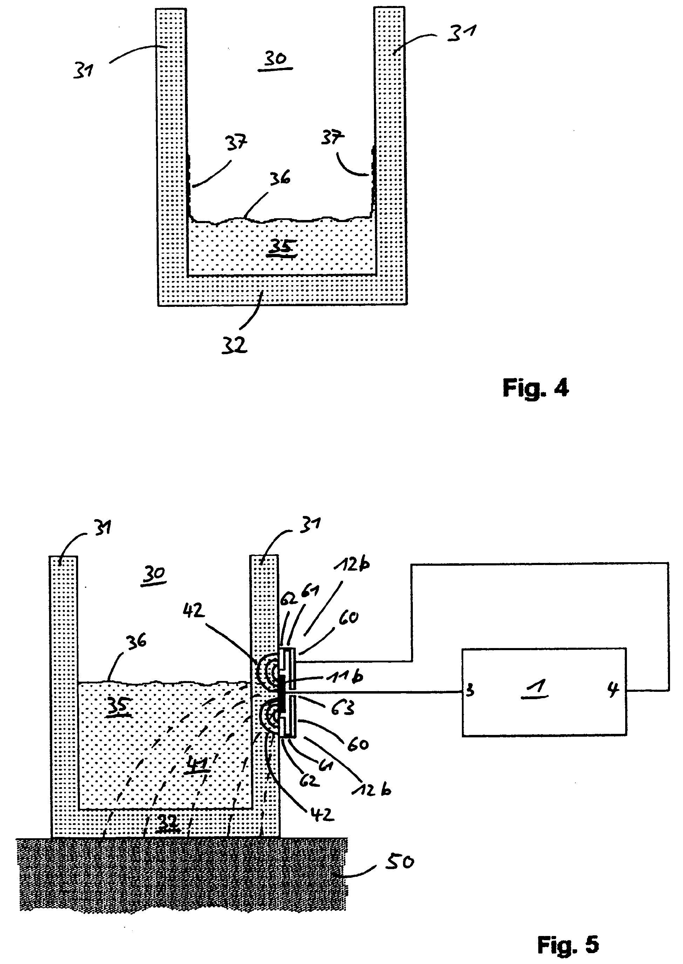

Fig. 4 zeigt eine Querschnittsansicht des Behälters 30, der bis zu einer bestimmten Höhe mit dem Medium 35 gefüllt ist. Oberhalb der Oberfläche 36 des Mediums 35 haftet an der Innenseite der Behälterwand 31 eine Schicht 37 des Mediums an. Um die Unterscheidungsfähigkeit zwischen einer massiven und einer scheinbaren, durch Benetzung oder Schaumbildung vorgetäuschten Füllung des Behälters mit dem Medium unter gleichzeitiger Ausnutzung der kapazitiven Eigenschaften des Mediums und seiner Leitfähigkeit zu erreichen, wird der Sensor erfindungsgemäß mit einer Arbeitsfrequenz von typischerweise 4 MHz bis 10 MHz betrieben. In einer bevorzugten Ausführungsform liegt die Arbeitsfrequenz bei ca. 7 MHz. Andere Arbeitsfrequenzen sind möglich und können z.B. durch entsprechende Bestückung bzw. Parametrierung des Verstärkers 1 realisiert werden.

In Fig. 5 ist ein erfindungsgemäßer Sensor mit einer bevorzugten Ausführungsform der Elektroden gezeigt, bei der die Elektroden mechanisch starr miteinander verbunden sind. Die Elektroden 11, 13 und 15 sind zu einer scheibenförmigen zweiten kombinierten Elektrode 11b vereinigt. Gleichzeitig sind die Elektroden 12, 14 zu einer dritten kombinierten Elektrode 12b vereinigt, die eine scheibenförmige Rückenplatte 60 und eine ausgesparte Frontplatte 62 umfaßt, die mittels eines elektrisch leitenden hohlzylindrischen Abstandshalters 61 an ihren Außenrändern elektrisch leitend und mechanisch starr miteinander verbunden sind. Die zweite kombinierte Elektrode 11b ist konzentrisch in der Aussparung der ausgesparten Frontplatte 62 angebracht und liegt mit der ausgesparten Frontplatte 62 in einer Ebene (Fig. 6). Die Rückenplatte 60 weist eine zentrische Bohrung 63 auf, die als Durchführung für den elektrischen Anschluß der zweiten kombinierten Elektrode 11b dient. Die feste Rückkopplungs-Kapazität 24 wird in dieser Ausführungsform im wesentlichen durch die zweite kombinierte Elektrode 11b und die Rückenplatte 60 gebildet, während die Kompensations-Kapazität im wesentlichen durch die zweite kombinierte Elektrode 11b und die ausgesparte Frontplatte 62 gebildet wird.

In einer anderen bevorzugten Ausführungsform sind die zweite kombinierte Elektrode 11b und die ausgesparte Frontplatte 62 jeweils als Leiterbahnen auf einer Seite einer Isolierschicht ausgebildet, während die Rückenplatte 60 als Leiterbahn auf der anderen Seite der Isolierschicht ausgebildet ist. Die Isolierschicht besteht in einer bevorzugten Ausführungsform aus einem Leiterplattenmaterial, das z.B. vom Typ Fr4 sein kann.

Andere geometrische Anordnungen der Elektroden sind möglich. Fig. 7 zeigt eine Ausführungsform, in der die zweite kombinierte Elektrode 11b von rechteckiger Form ist. Die ausgesparte Frontplatte 62 (Fig. 6) ist dabei durch zwei Leiterstreifen 62a ersetzt, die sich an gegenüberliegenden Seiten der zweiten kombinierten Elektrode 11b befinden. Fig. 8 zeigt eine weitere Ausführungsform, in der die zweite kombinierte Elektrode 11b von rechteckiger Form und von einem Leiterstreifen 62a umrandet ist.

In einer anderen nicht gezeigten Ausführungsform weist der Sensor mindestens eine Gruppe aus einer Mehrzal von miteinander verbundenden Elektroden auf. Z.B. kann die aktive Elektrode 11 aufgespalten sein in eine Mehrzahl von miteinander verbundenen Abschnitten, die an verschiedenen Orten angeordnet sind. Eine Anwendung dieser Ausführungsform besteht z.B. in der simultanen Überwachung der Füllstände in mehreren Behälters, bei der eine Auslösung des Sensors erwünscht ist, wenn in mindestens einem der Behälter ein bestimmter kritischer Füllstand überschritten ist.

In einer weiteren nicht gezeigten Ausführungsform ist die aktive Elektrode 11 innerhalb des Behälters 30 nahe dessen Innenwand so angeordnet, daß sie in das Medium 35 eintaucht, wenn der Füllstand einen bestimmten Wert überschreitet. Der Betrieb des Sensors wird durch diese Anordnung nicht beeinträchtigt. Falls nach einer darauf folgendenden Absenkung des Füllstandes Benetzung der Innenwände des Behälters 30 oder Schaumbildung bis in die Anbringungshöhe der aktiven Elektrode 11 vorliegt, ist auch die Elektrode 11 selbst von Benetzung betroffen. In einer Ausführungsform der Erfindung, in der der Oszillator mit einer Arbeitsfrequenz im Bereich von ca. 4 MHz bis ca. 10 MHz betrieben wird, ist die Unterscheidungsfähigkeit zwischen einer massiven und einer scheinbaren, durch Benetzung oder Schaumbildung vorgetäuschten Füllung des Behälters mit dem Medium weiterhin gegeben.

Erfindungsgemäß können die Elektroden innerhalb oder außerhalb des Behälters angeordnet sein.

In einer weiteren nicht gezeigten Ausführungsform der Erfindung ist der Sensor gegen ein Eindringen des Mediums gesichert und innerhalb des Behälters 30 so angeordnet, daß der Sensor in das Medium 35 eintaucht, wenn der Füllstand einen bestimmten Wert überschreitet.

### Gewerbliche Anwendbarkeit:

Die erfindungsgemäßen, berührungslos arbeitenden kapazitiven Sensoren sind insbesondere zur Detektion eines Füllstandes eines Mediums in einem Behälter mit nichtmetallischer Behälterwand geeignet. Die Nützlichkeit der Sensoren liegt darin, dass sie auslösen, wenn der Füllstand eines Mediums in einem Behälter oberhalb oder auch unterhalb einer bestimmten kritischen Schwelle liegt, wobei jedoch störende Einflüsse der kapazitiven Eigenschaften des Behälters zum wesentlichen Teil neutralisiert sind. Höchst vorteilhaft verschiebt sich der Auslösepunkt der Sensoren bei einer Benetzung der Behälterinnenwand oder Schaumbildung über der Oberfläche des Mediums nicht bzw. nur unwesentlich. Deshalb können die Sensoren vorteilhaft zwischen einem vollen Gefäß und einem teilweise leeren Gefäß mit Anhaftungen des Mediums auf der inneren Gefäßwandung oder mit Schaum auf der Oberfläche des Mediums unterscheiden.

### Bezugszeichenliste:

- 1: Verstärker
- 2: Wechselspanungssignal am Eingang des Verstärkers
- 3: Eingang des Verstärkers
- 4: Ausgang des Verstärkers
- 11: erste Elektrode (aktive Elektrode)
- 11a: erste kombinierte Elektrode (aus den Elektroden 11, 13)
- 11b: zweite kombinierte Elektrode (aus den Elektroden 11,13,15)
- 12: zweite Elektrode (Kompensations-Elektrode)
- 12b: dritte kombinierte Elektrode (aus den Elektroden 12, 14)
- 13: dritte Elektrode
- 14: verstärkerausgangsseitige Elektrode des Kondensators
- 15: verstärkereingangsseitige Elektrode des Kondensators
- 21: erste Kapazität (aktive Kapazität)
- 22: zweite Kapazität (Kompensations-Kapazität)
- 24: dritte Kapazität (feste Rückkopplungs-Kapazität)
- 24a: Kondensator
- 25: Kapazität des Mediums
- 26: Behälter-Eigenkapazität
- 27: Übergangskapazität
- 30: Behälter
- 31: Behälterwand
- 32: Behälterboden
- 35: Medium
- 36: Oberfläche des Mediums
- 37: an der Behälterwand anhaftende Schicht des Mediums
- 41: elektrisches Feld zwischen erster Elektrode und Masse
- 42: elektrisches Feld zwischen erster Elektrode und zweiter Elektrode
- 50: Masse
- 60: Rückenplatte
- 61: Abstandshalter
- 62: ausgesparte Frontplatte
- 62a: Leiterstreifen
- 63: Bohrung

## Patentansprüche

1. Kapazitiver Sensor zur Detektion des Füllstandes eines Mediums (35) in einem Behälter (30) mit nichmetallischer Behälterwand (31), wobei der Behälter (30) mit der Erde bzw. Masse (50) in Verbindung steht, mit einem einen Eingang (3) und einen Ausgang (4) aufweisenden Verstärker (1), welcher mit einer Rückkopplung versehen ist, weiter umfassend eine Schaltung, die ein Spannungs-Schaltsignal liefert, wenn der Verstärker (1) nicht oszilliert,
**gekennzeichnet durch** eine erste Elektrode (11), die an den Eingang (3) des Verstärkers (1) angeschlossen ist und gegenüber der Masse (50) mit einer ersten Kapazität (21) behaftet ist, so daß der Eingang (3) des Verstärkers (1) kapazitiv belastet ist, wobei die Elektrode (11) so angeordnet ist, daß **durch** das vom Ausgang (4) des Verstärkers (1) rückgekoppelte Spannungssignal (2) auf den Eingang (3) zwischen der Elektrode (11) und der Masse (50) entstehende elektrische Feld (41) im wesentlichen **durch** den Behälter (30) und das Medium (35) zur Masse (50) verläuft, so daß die Größe der ersten Kapazität einerseits mit zunehmendem Füllstand des Mediums (35) in dem Behälter (30) anwächst und andererseits **durch** die kapazitiven Eigenschaften des Behälters (30) beeinflußt ist,
eine zweite Elektrode (12), die an den Ausgang (4) des Verstärkers (1) angeschlossen ist, und
eine dritte Elektrode (13), die an den Eingang (3) des Verstärkers (1) angeschlossen ist,
wobei sich die zweite Elektrode (12) und die dritte Elektrode (13) in einem Abstand zueinander auf der Behälterwand (31) des Behälters (30) befinden und so positioniert sind, daß zwischen ihnen **durch** ein sich ausbildendes elektrisches Feld (42) eine zweite Kapazität (22) besteht, deren Größe wesentlich **durch** die kapazitiven Eigenschaften des Behälters (30) bzw. der Behälterwand (31) und nur unwesentlich **durch** den Füllstand des Mediums (35) im Behälter (30) beeinflußt ist und die eine kapazitive Rückkopplung des Verstärkers (1) darstellt,
wobei die erste Elektrode (11) und die dritte Elektrode (13) zusammenfallen können und in diesem Fall eine erste kombinierte Elektrode (11a) bilden,
und ferner umfassend einen Kondensator (24a), der eine dritte Kapazität (24) aufweist, deren Größe im Wesentlichen weder **durch** die kapazitiven Eigenschaften des Behälters (30) noch **durch** den Füllstand des Mediums (35) im Behälter (30) beeinflusst ist, wobei die eine Elektrode (14) des Kondensators (24a) an den Ausgang (4) und die andere Elektrode (15) des Kondensators (24a) an den Eingang (3) des Verstärkers (1) angeschlossen ist, so daß der Kondensator (24a) parallel zu der zweiten Kapazität (22) ebenfalls eine kapazitive Rückkopplung des Verstärkers (1) darstellt,
wobei die Kapazität (24) des Kondensators (24a) so gewählt ist, daß der Verstärker (1) aufgrund der kapazitiven Rückkopplung nur dann oszilliert, wenn der Füllstand des Mediums (35) im Behälter (30) und damit die erste Kapazität (21) jeweils unterhalb einer bestimmten Schwelle liegen, wobei die zweite Kapazität (22) dem den Eingang (3) des Verstärkers (1) belastenden kapazitiven Einfluß des Behälters (30) entgegenwirkt, so daß der kapazitive Einfluß des Behälters (30) reduziert ist, und als Verstärker (1) ein solcher mit einem Verstärkungsfaktor größer als 1 verwendet wird.

2. Sensor nach Anspruch 1, **dadurch gekennzeichnet, daß** die erste kombinierte Elektrode (11a), die dritte Elektrode (13) und die verstärkereingangsseitige Elektrode (15) des Kondensators (24a) zusammenfallen und somit eine zweite kombinierte Elektrode (11b) bilden.

3. Sensor nach Anspruch 1, **dadurch gekennzeichnet, daß** die zweite Elektrode (12) und die verstärkerausgangsseitige Elektrode (14) des Kondensators (24a) zusammenfallen und somit eine dritte kombinierte Elektrode (12b) bilden.

4. Sensor nach Anspruch 2 und 3, **dadurch gekennzeichnet, daß** die zweite kombinierte Elektrode (11b) und die dritte kombinierte Elektrode (12b) mechanisch starr miteinander verbunden und gegebenenfalls konzentrisch angeordnet sind.

5. Sensor nach Anspruch 2 und 3, **dadurch gekennzeichnet, daß** die dritte kombinierte Elektrode (12b) eine erste Platte (60) und eine ausgesparte zweite Platte (62) aufweist, die mittels eines Leiters (61) mit der ersten Platte (60) verbunden ist, in einem Abstand von der ersten Platte (60) und konzentrisch zu dieser angeordnet ist, wobei die zweite kombinierte Elektrode (11b) in einer Ebene mit der ausgesparten zweiten Platte (62) liegt und innerhalb der Aussparung angeordnet ist.

6. Sensor nach Anspruch 5, **dadurch gekennzeichnet, daß** die erste Platte (60) auf einer Seite einer Leiterplatte und die ausgesparte zweite Platte (62) und die zweite kombinierte Elektrode (11b) auf der anderen Seite der Leiterplatte aufgebracht sind.

7. Sensor nach Anspruch 1, **dadurch gekennzeichnet, daß** der Sensor Teil einer Schaltung ist, die ein Spannungs-Schaltsignal liefert, wenn der Verstärker (1) nicht oszilliert.

8. Sensor nach Anspruch 1, **dadurch gekennzeichnet, daß** der Verstärker (1) durch seine Dimensionierung in einen hohen Arbeitsfrequenzbereich gebracht ist, wobei aufgrund des hohen Arbeitsfrequenzbereiches der kapazitive Blindwiderstand der Kopplung der Elektroden (11,12,13) zum Medium (35) soweit reduziert wird, daß dünne Anhaftungen oder Schäume des Mediums (35) aufgrund ihres geringeren Leitwertes vom kompakten Medium mit seinem höheren Leitwert deutlich unterscheidbar sind, wobei bei einem Füllstand des Mediums unterhalb einer vorgegebenen Schwelle, jedoch bei Vorliegen von Anhaftungen oder Schaum oberhalb der Oberfläche des Mediums bzw. dieses Füllstandes des Mediums die Belastung des Eingangs (3) des Verstärkers (1) durch den ohmschen und kapazitiven Widerstand zwischen der Elektrode (11) und Masse (50) so beeinflußt ist, daß der Verstärker (1) oszilliert.

9. Sensor nach einem der vorherigen Ansprüche, **dadurch gekennzeichnet, daß** eine Elektrode des Sensors aus einer Mehrzahl von miteinander verbundenen Elektroden besteht.

10. Sensor nach einem der vorherigen Ansprüche, **dadurch gekennzeichnet, daß** mindestens eine Elektrode im Inneren des Behälters (30) angeordnet ist und bei Überschreiten eines bestimmten Füllstandes in das Medium (35) eintaucht.

11. Sensor nach einem der vorherigen Ansprüche 1-10, **dadurch gekennzeichnet, daß** der Sensor im Inneren des Behälters (30) angeordnet ist und bei Überschreiten eines bestimmten Füllstandes in das Medium (35) eintaucht.

12. Kapazitiver Sensor zur Detektion des Füllstandes eines Mediums (35) in einem Behälter (30) mit nichmetallischer Behälterwand (31), welcher mit der Erde bzw. Masse (50) in Verbindung steht, mit einem einen Eingang (3) und einen Ausgang (4) aufweisenden Verstärker (1) mit einem Verstärkungsfaktor größer als 1, wobei der Verstärker (1) mit einer Rückkopplung versehen ist, weiter umfassend eine Schaltung, die ein Spannungs-Schaltsignal liefert, wenn der Verstärker (1) nicht oszilliert, weiter umfassend eine erste Elektrode (11), die an den Eingang (3) des Verstärkers (1) angeschlossen ist und gegenüber Masse (50) mit einer ersten Kapazität (21) behaftet ist, so daß der Eingang (3) des Verstärkers (1) kapazitiv belastet ist, was eine Verkleinerung eines am Eingang (3) des Verstärkers (1) anliegenden Signals (2) bewirkt, wobei die Elektrode (11) so angeordnet ist, daß das durch das Spannungssignal (2) zwischen der Elektrode (11) und Masse (50) entstehende elektrische Feld (41) im wesentlichen durch den Behälter (30) und das Medium (35) verläuft, so daß die Größe der ersten Kapazität mit zunehmendem Füllstand des Mediums (35) in dem Behälter (30) anwächst, weiter umfassend eine zweite Elektrode (12), die an den Ausgang (4) des Verstärkers (1) angeschlossen ist, und eine dritte Elektrode (13), die an den Eingang (3) des Verstärkers (1) angeschlossen ist, wobei sich die Elektroden (12) und (13) in einem Abstand zueinander befinden und so positioniert sind, daß zwischen ihnen eine zweite Kapazität (22) besteht, deren Größe wesentlich durch die kapazitiven Eigenschaften des Behälters (30) und nur unwesentlich durch den Füllstand des Mediums (35) im Behälter (30) beeinflußt ist und die eine kapazitive Rückkopplung des Verstärkers (1) bewirkt, was eine Vergrößerung eines am Eingang (3) des Verstärkers (1) anliegenden Spannungssignals (2) bewirkt, und ferner umfassend einen Kondensator (24a), der eine dritte Kapazität (24) aufweist, deren Größe im wesentlichen weder durch die kapazitiven Eigenschaften des Behälters (30) noch durch den Füllstand des Mediums (35) im Behälter (30) beeinflußt ist, wobei die eine Elektrode (14) des Kondensators (24a) an den Ausgang (4) und die andere Elektrode (15) des Kondensators (24a) an den Eingang (3) des Verstärkers (1) angeschlossen ist, so daß der Kondensator (24a) parallel zu der zweiten Kapazität (22) ebenfalls eine kapazitive Rückkopplung des Verstärkers (1) bewirkt, was eine weitere Vergrößerung des am Eingang (3) des Verstärkers (1) anliegenden Spannungssignals (2) bewirkt, wobei die Kapazität (24) des Kondensators (24a) so gewählt ist, daß der Verstärker (1) aufgrund der kapazitiven Rückkopplung nur dann oszilliert, wenn der Füllstand des Mediums (35) im Behälter (30) und damit die erste Kapazität (21) jeweils unterhalb einer bestimmten Schwelle liegen, wobei als Verstärker (1) ein Verstärker mit einer Arbeitsfrequenz zwischen cirka 4MHz und cirka 10 MHz verwendet wird, wodurch die Belastung des Eingangs (3) des durch den ohmschen und kapazitiven Widerstand zwischen der Elektrode (11) und Masse (50) so beeinflußt ist, daß der Verstärker (1) oszilliert, wenn der Füllstand des Mediums (35) in dem Behälter (30) unterhalb dieser Schwelle liegt und die Innenseite der Wand (31) des Behälters (30) oberhalb der Oberfläche (36) des Mediums (35) mit einer Schicht (37) des Mediums (35) behaftet ist oder wenn oberhalb der Oberfläche (36) des Mediums (35) Schaum vorliegt, wobei die zweite Kapazität (22) so gewählt ist, daß der Verkleinerung des Spannungssignals (2) durch die kapazitive Belastung des Eingangs (3) des Verstärkers (1) allein aufgrund der kapazitiven Eigenschaften des Behälters (30) entgegengewirkt wird durch die Vergrößerung des Spannungssignals (2), die durch die kapazitive Rückkopplung allein aufgrund der zweiten Kapazität (22) verursacht wird, wobei die erste Elektrode (11) und die verstärkereingangsseitige Elektrode (15) des Kondensators (24a) eine scheibenförmige zweite kombinierte Elektrode (11b) bilden, die als streifenförmiger Leiter (62a) auf einer ersten Seite einer Leiterplatte ausgebildet ist, und wobei die zweite Elektrode (12) und die Elektrode (14) des Kondensators (24a) zusammenfallen und eine dritte kombinierte Elektrode (12b) bilden, die mit der zweiten kombinierten Elektrode (11b) mechanisch starr verbunden ist und die eine scheibenförmige erste Platte (60), die als Leiterbahn auf der anderen Seite der Leiterplatte ausgebildet ist, und eine ringförmig ausgesparte zweite Platte (62) aufweist, die in einer Ebene mit der zweiten kombinierten Elektrode (11b) liegt und diese konzentrisch umgibt und als Leiterbahn auf der ersten Seite der Leiterplatte ausgebildet ist und konzentrisch zu der ersten Platte (60) angebracht ist.

13. Sensor nach Anspruch 12, **dadurch gekennzeichnet, daß** die zweite kombinierte Elektrode (11b) scheibenförmig ist und die dritte kombinierte Elektrode (12b) eine scheibenförmige Rückenplatte (60) und eine ausgesparte Frontplatte (62) umfaßt, die mittels eines elektrisch leitenden hohlzylindrischen Abstandshalters (61) an ihren Außenrändern elektrisch leitend und mechanisch starr miteinander verbunden sind, wobei die zweite kombinierte Elektrode (11b) konzentrisch in der Aussparung der ausgesparten Frontplatte (62) angebracht ist und mit derselben in einer Ebene liegt, wobei die feste Rückkopplungs-Kapazität (24) im wesentlichen durch die zweite kombinierte Elektrode (11b) und die Rückenplatte (60), während die Kompensations-Kapazität im wesentlichen durch die zweite kombinierte Elektrode (11b) und die ausgesparte Frontplatte (62) gebildet werden.

## Claims

1. A capacitive sensor for detecting the filling level of a medium (35) in a container (30) with a non-metallic wall (31), whereby the container (30) is connected to the earth or ground (50), comprising an amplifier (1) with an input (3) and an output (4), said amplifier (1) being provided with a feedback, and said sensor also comprising a circuit that supplies a voltage switching signal when the amplifier (1) is not oscillating,
**characterized by** a first electrode (11) that is connected to the input (3) of the amplifier (1) and that is loaded with a first capacitance (21) vis-à-vis the ground (50), so that the input (3) of the amplifier (1) is capacitively loaded, whereby the electrode (11) is arranged in such a way that the electric field (41) generated between the electrode (11) and the ground (50) by the signal (2) that is fed back from the output (4) of the amplifier (1) to the input (3), runs essentially through the container (30) and through the medium (35) to the ground (50) so that the magnitude of the first capacitance, on the one hand, increases as the filling level of the medium (35) in the container (30) rises and, on the other hand, is influenced by the capacitive properties of the container (30),
by a second electrode (12) that is connected to the output (4) of the amplifier (1) and
by a third electrode (13) that is connected to the input (3) of the amplifier (1),
whereby the second electrode (12) and the third electrode (13) are located at a distance from each other on the container wall (31) of the container (30) and are positioned in such a way that, due to an electric field (42) that is generated, a second capacitance (22) exists between them whose magnitude is largely influenced by the capacitive properties of the container (30) or of the container wall (31) and only negligibly influenced by the filling level of the medium (35) in the container (30), said capacitance constituting a capacitive feedback of the amplifier (1),
whereby the first electrode (11) and the third electrode (13) can coincide and, in this case, form a first combined electrode (11a),
and also comprising a capacitor (24a) that has a third capacitance (24), whose magnitude is essentially influenced neither by the capacitive properties of the container (30) nor by the filling level of the medium (35) in the container (30), whereby one electrode (14) of the capacitor (24a) is connected to the output (4) while the other electrode (15) of the capacitor (24a) is connected to the input (3) of the amplifier (1), so that the capacitor (24a), parallel to the second capacitance (22), likewise constitutes a capacitive feedback of the amplifier (1),
whereby the capacitance (24) of the capacitor (24a) is selected in such a way that the amplifier (1), owing to the capacitive feedback, only oscillates when the filling level of the medium (35) in the container (30) and thus the first capacitance (21) each lie below a certain threshold, whereby the second capacitance (22) counters the capacitive influence of the container (30) that loads the input (3) of the amplifier (1), so that the capacitive influence exerted by the container (30) is reduced and, as the amplifier (1), an amplifier is used that has an amplification factor greater than 1.

2. The sensor according to claim 1, **characterized in that** the first combined electrode (11a), the third electrode (13) and the electrode (15) of the capacitor (24a) on the input side of the amplifier all coincide and thus form a second combined electrode (11 b).

3. The sensor according to claim 1, **characterized in that** the second electrode (12) and the electrode (14) of the capacitor (24a) on the input side of the amplifier coincide and thus form a third combined electrode (12b).

4. The sensor according to claims 2 and 3, **characterized in that** the second combined electrode (11 b) and the third combined electrode (12b) are mechanically rigidly connected to each other and optionally arranged concentrically.

5. The sensor according to claims 2 and 3, **characterized in that** the third combined electrode (12b) has a first plate (60) and a cutout second plate (62), which is connected to the first plate (60) by means of a conductor (61) and which is arranged at a distance from the first plate (60) and concentrically to it, whereby the second combined electrode (11 b) lies in a plane with the cutout second plate (62) and is arranged inside said cutout.

6. The sensor according to claim 5, **characterized in that** the first plate (60) is attached to one side of a printed circuit board and the cutout second plate (62) and the second combined electrode (11b) are attached to the other side of the printed circuit board.

7. The sensor according to claim 1, **characterized in that** the sensor is part of a circuit that supplies a switching signal when the amplifier (1) is not oscillating.

8. The sensor according to claim 1, **characterized in that** the dimensioning of the amplifier (1) causes it to have a high operating frequency, whereby, due to the high operating frequency range, the capacitive reactive resistance of the coupling of the electrodes (11, 12, 13) to the medium (35) is reduced to such an extent that thin adhering layers or foams of the medium (35) with their low conductivity can be clearly distinguished from the compact medium with its higher conductivity, whereby if the filling level of the medium is below a certain threshold, while adhering medium or foam is present above the surface of the medium or above the filling level of the medium, the load of the input (3) of the amplifier (1) is influenced by the ohmic and capacitive resistance between the electrode (11) and the ground (50) in such a way that the amplifier (1) oscillates.

9. The sensor according to any of the preceding claims, **characterized in that** one electrode of the sensor consists of a plurality of electrodes connected to each other.

10. The sensor according to any of the preceding claims, **characterized in that** at least one electrode is arranged inside the container (30) and it is immersed into the medium (35) when a certain filling level is exceeded.

11. The sensor according to any of the preceding claims 1 to 10, **characterized in that** the sensor is arranged inside the container (30) and it is immersed into the medium (35) when a certain filling level is exceeded.

12. A capacitive sensor for detecting the filling level of a medium (35) in a container (30) with a non-metallic wall (31), said sensor being connected to the earth or ground (50), comprising an amplifier (1) with an input (3) and an output (4) and having an amplification factor that is greater than 1, said amplifier (1) being provided with a feedback, and said sensor also comprising a circuit that supplies a voltage switching signal when the amplifier (1) is not oscillating, also comprising a first electrode (11) that is connected to the input (3) of the amplifier (1) and that is loaded with a first capacitance (21) vis-à-vis the ground (50), so that the input (3) of the amplifier (1) is capacitively loaded, which brings about a decrease of a signal (2) that is present at the input (3) of the amplifier (1), whereby the electrode (11) is arranged in such a way that the electric field (41) generated by the voltage signal (2) between the electrode (11) and the ground (50) travels essentially through the container (30) and through the medium (35) so that the magnitude of the first capacitance increases as the filling level of the medium (35) in the container (30) rises, also comprising a second electrode (12) that is connected to the output (4) of the amplifier (1) and comprising a third electrode (13) that is connected to the input (3) of the amplifier (1), whereby the electrodes (12) and (13) are at a distance from each other and are positioned in such a way that a second capacitance (22) exists between them whose magnitude is largely influenced by the capacitive properties of the container (30) and only negligibly influenced by the filling level of the medium (35) in the container (30), said capacitance bringing about a capacitive feedback of the amplifier (1), which brings about an increase of a voltage signal (2) present at the input (3) of the amplifier (1), and also comprising a capacitor (24a) that has a third capacitance (24), whose magnitude is essentially influenced neither by the capacitive properties of the container (30) nor by the filling level of the medium (35) in the container (30), whereby one electrode (14) of the capacitor (24a) is connected to the output (4) while the other electrode (15) of the capacitor (24a) is connected to the input (3) of the amplifier (1), so that the capacitor (24a), parallel to the second capacitance (22), likewise brings about a capacitive feedback of the amplifier (1), which brings about a further increase of the voltage signal (2) that is present at the input (3) of the amplifier (1), whereby the capacitance (24) of the capacitor (24a) is selected in such a way that the amplifier (1), owing to the capacitive feedback, only oscillates when the filling level of the medium (35) in the container (30) and thus the first capacitance (21) each lie below a certain threshold, whereby the amplifier employed is an amplifier (1) having an operating frequency between about 4 MHz and about 10 MHz, as a result of which the load of the input (3) of the amplifier (1) is influenced by the ohmic and capacitive resistance between the electrode (11) and the ground (50) in such a manner that the amplifier (1) oscillates when the filling level of the medium (35) in the container (30) is below this threshold and the inside of the wall (31) of the container (30) above the surface (36) of the medium (35) is wetted with a layer (37) of the medium (35) or when foam is present above the surface (36) of the medium (35), whereby the second capacitance (22) is selected in such a way that the decrease of the voltage signal (2) due to the capacitive load of the input (3) of the amplifier (1) is countered only by the capacitive properties of the container (30) as a result of the increase of the voltage signal (2) that is caused by the capacitive feedback only by the second capacitance (22), whereby the first electrode (11) and the electrode (15) of the capacitor (24a) on the input side of the amplifier form a disk-shaped second combined electrode (11 b) that is configured as a strip-like conductor (62a) on a first side of a printed circuit board, and whereby the second electrode (12) and the electrode (14) of the capacitor (24a) coincide and form a third combined electrode (12b) that is mechanically rigidly connected to the second combined electrode (11 b) and that has a disk-shaped first plate (60) that is configured as a track conductor on the other side of the printed circuit board, as well as a ringshaped cutout second plate (62) that lies in a plane with the second combined electrode (11 b) and surrounds it concentrically and that is configured as a conductor track on the first side of the printed circuit board and that is arranged concentrically to the first plate (60).

13. The sensor according to claim 12, **characterized in that** the second combined electrode (11 b) is disk-shaped and the third combined electrode (12b) has a disk-shaped back plate (60) and a cutout front plate (62), which are electrically conductively and mechanically rigidly connected to each other by means of an electrically conductive hollow-cylindrical spacer (61) located on their outer edges, whereby the second combined electrode (11 b) is arranged concentrically in the cutout of the cutout front plate (62) and lies in a plane with the latter, whereby the fixed feedback capacitance (24) is essentially formed by the second combined electrode (11b) and by the back plate (60), whereas the compensation capacitance is essentially formed by the second combined electrode (11 b) and the cutout front plate (62).

## Revendications

1. Détecteur capacitif du niveau de remplissage d'un milieu (35) au sein d'un contenant (30) à paroi non-métallique (31), le contenant (30) étant relié à la terre ou à la masse (50), comprenant un amplificateur (1) présentant une entrée (3) et une sortie (4) et doté d'une rétroaction, et comprenant de plus un circuit qui délivre un signal de commutation de tension lorsque l'amplificateur (1) n'oscille pas,
**caractérisé par** une première électrode (11) connectée à l'entrée (3) de l'amplificateur (1) et présentant par rapport à la masse (50) une première capacité (21), de sorte que l'entrée (3) de l'amplificateur (1) est chargée capacitivement, l'électrode (11) étant disposée de façon à ce que, de par le signal de tension (2) appliqué par rétroaction de la sortie (4) de l'amplificateur (1) sur l'entrée (3), le champ électrique (41) engendré entre l'électrode (11) et la masse (50) passe essentiellement à travers le contenant (30) et le milieu (35), si bien que la grandeur de la première capacité augmente d'une part au fur et à mesure que le niveau de remplissage du milieu (35) augmente dans le contenant (30) et est influencée d'autre part par les propriétés capacitives du contenant (30),
par une deuxième électrode (12) connectée à la sortie (4) de l'amplificateur (1) et
par une troisième électrode (13) connectée à l'entrée (3) de l'amplificateur (1),
la deuxième électrode (12) et la troisième électrode (13) se trouvant espacées l'une de l'autre sur la paroi (31) du contenant (30) et étant positionnées de sorte que, en raison de la formation d'un champ électrique (42), il existe entre elles une deuxième capacité (22) dont la grandeur est influencée surtout par les propriétés capacitives du contenant (30) ou de la paroi du contenant (31) et seulement dans une mesure insignifiante par le niveau de remplissage du milieu (35) dans le contenant (30) et qui représente une rétroaction capacitive de l'amplificateur (1),
la première électrode (11) et la troisième électrode (13) pouvant coïncider en formant ainsi une première électrode combinée (11a),
et comprenant de plus un condensateur (24a) présentant une troisième capacité (24) dont la grandeur n'est influencée pour l'essentiel ni par les propriétés capacitives du contenant (30), ni par le niveau de remplissage du milieu (35) dans le contenant (30), l'électrode (14) du condensateur (24a) étant reliée à la sortie (4) et l'autre électrode (15) du condensateur (24a) à l'entrée (3) de l'amplificateur (1), de sorte que, parallèlement à la deuxième capacité (22), le condensateur (24a) représente lui aussi une rétroaction capacitive de l'amplificateur (1),
la capacité (24) du condensateur (24a) étant choisie de façon à ce que l'amplificateur (1) n'oscille en raison de la rétroaction capacitive que lorsque le niveau de remplissage du milieu (35) dans le contenant (30) et par conséquent la première capacité (21) se trouvent en dessous d'un seuil défini, la deuxième capacité (22) contrecarrant l'influence capacitive du contenant (30) chargeant l'entrée (3) de l'amplificateur, de sorte que l'influence capacitive du contenant (30) est réduite, et que l'amplificateur utilisé (1) est un amplificateur dont le facteur d'amplification est supérieur à 1.

2. Détecteur selon la revendication 1, **caractérisé en ce que** la première électrode combinée (11a), la troisième électrode (13) et l'électrode (15) côté entrée de l'amplificateur du condensateur (24a) coïncident en formant ainsi une deuxième électrode combinée (11 b).

3. Détecteur selon la revendication 1, **caractérisé en ce que** la deuxième électrode (12) et l'électrode (14) côté sortie de l'amplificateur du condensateur (24a) coïncident en formant ainsi une troisième électrode combinée (12b).

4. Détecteur selon les revendications 2 et 3, **caractérisé en ce que** la deuxième électrode combinée (11b) et la troisième électrode combinée (12b) sont reliées entre elles de façon mécanique et rigide et disposées concentriquement le cas échéant.

5. Détecteur selon les revendications 2 et 3, **caractérisé en ce que** la troisième électrode combinée (12b) présente une première plaque (60) et une deuxième plaque (62) évidée reliée à la première plaque (60) via un conducteur (61) et disposée de façon espacée de la première plaque (60) et concentriquement par rapport à celle-ci, la deuxième électrode combinée (11 b) étant disposée sur un plan avec la deuxième plaque évidée (62) à l'intérieur de l'évidement.

6. Détecteur selon la revendication 5, **caractérisé en ce que** la première plaque (60) est appliquée sur l'une des deux faces d'un circuit imprimé et la deuxième plaque évidée (62) ainsi que l'électrode combinée (11 b) sur l'autre face du circuit imprimé.

7. Détecteur selon la revendication 1, **caractérisé en ce que** le détecteur fait partie d'un circuit qui délivre un signal de commutation de tension lorsque l'amplificateur (1) n'oscille pas.

8. Détecteur selon la revendication 1, **caractérisé en ce que** l'amplificateur (1) est amené, de par son dimensionnement, dans une gamme de fréquences de travail élevées, ce qui a pour conséquence de réduire la réactance capacitive du couplage des électrodes (11,12,13) vers le milieu (35) de façon à ce que des couches minces adhérantes ou des mousses du milieu (35) qui présentent une faible conductance, peuvent être distinguées clairement du milieu compact présentant une conductance plus élevée, de sorte que, lorsque le niveau de remplissage du milieu se trouve au-dessous d'un seuil prédéfini et qu'il existe des adhérences ou de la mousse au-dessus de la surface dudit milieu ou dudit niveau de remplissage du milieu, la charge de l'entrée (3) de l'amplificateur (1) est influencée par la résistance ohmique et capacitive entre l'électrode (11) et la masse (50) de façon à ce que l'amplificateur (1) oscille.

9. Détecteur selon l'une quelconque des revendications précédentes, **caractérisé en ce qu'**une électrode du détecteur consiste en plusieurs électrodes reliées entre elles.

10. Détecteur selon l'une quelconque des revendication précédentes, **caractérisé en ce qu'**au moins une électrode est disposée à l'intérieur du contenant (30) et s'immerge dans le milieu (35) lorsqu'un niveau de remplissage défini est dépassé.

11. Détecteur selon l'une des revendications précédentes 1 à 10, **caractérisé en ce que** le détecteur est disposé à l'intérieur du contenant (30) et s'immerge dans le milieu (35) lorsqu'un niveau de remplissage défini est dépassé.

12. Détecteur capacitif du niveau de remplissage d'un milieu (35) au sein d'un contenant (30) à paroi non-métallique (31) et relié à la terre ou à la masse (50), comprenant un amplificateur (1) avec un facteur d'amplification supérieur à 1 qui présente une entrée (3) et une sortie (4) et qui est doté d'une rétroaction, et comprenant de plus un circuit qui délivre un signal de commutation de tension lorsque l'amplificateur (1) n'oscille pas, comprenant de plus une première électrode (11) connectée à l'entrée (3) de l'amplificateur (1) et présentant par rapport à la masse (50) une première capacité (21), de sorte que l'entrée (3) de l'amplificateur (1) est chargée capacitivement, ce qui entraîne la diminution d'un signal (2) présent à l'entrée (3) de l'amplificateur (1), l'électrode (11) étant disposée de façon à ce que le champ électrique (41) engendré par le signal de tension (2) entre l'électrode (11) et la masse (50) passe essentiellement à travers le contenant (30) et le milieu (35), si bien que la grandeur de la première capacité augmente au fur et à mesure que le niveau de remplissage du milieu (35) augmente dans le contenant (30), comprenant de plus une deuxième électrode (12) connectée à la sortie (4) de l'amplificateur (1) et une troisième électrode (13) connectée à l'entrée (3) de l'amplificateur (1), les électrodes (12) et (13) étant espacées l'une de l'autre et positionnées de sorte qu'il existe une deuxième capacité (22) entre elles, dont la grandeur est influencée surtout par les propriétés capacitives du contenant (30) et seulement dans une mesure insignifiante par le niveau de remplissage du milieu (35) dans le contenant (30) et qui provoque une rétroaction capacitive de l'amplificateur (1), ce qui entraîne l'augmentation d'un signal de tension (2) présent à l'entrée (3) de l'amplificateur (1), et comprenant de plus un condensateur (24a) présentant une troisième capacité (24) dont la grandeur n'est influencée pour l'essentiel ni par les propriétés capacitives du contenant (30), ni par le niveau de remplissage du milieu (35) dans le contenant (30), l'électrode (14) du condensateur (24a) étant reliée à la sortie (4) et l'autre électrode (15) du condensateur (24a) à l'entrée (3) de l'amplificateur (1), de sorte que, parallèlement à la deuxième capacité (22), le condensateur (24a) produit lui aussi une rétroaction capacitive de l'amplificateur (1), ce qui entraîne une autre augmentation du signal de tension (2) présent à l'entrée (3) de l'amplificateur (1), la capacité (24) du condensateur (24a) étant choisie de façon à ce que l'amplificateur (1) n'oscille en raison de la rétroaction capacitive que lorsque le niveau de remplissage du milieu (35) dans le contenant (30) et par conséquent la première capacité (21) se trouvent en dessous d'un seuil défini, l'amplificateur (1) utilisé étant un amplificateur dont la fréquence de travail est comprise entre environ 4 MHz et environ 10 MHz, la charge de l'entrée (3) par la résistance ohmique et capacitive entre l'électrode (11) et la masse (50) étant influencée de sorte que l'amplificateur (1) oscille lorsque le niveau de remplissage du milieu (35) dans le contenant (30) descend en dessous de ce seuil et que la face intérieure de la paroi (31) du contenant (30) au-dessus de la surface (36) du milieu (35) est couverte d'une couche (37) du milieu (35) ou lorsqu'il y a de la mousse au-dessus de la surface (36) du milieu (35), la deuxième capacité (22) étant choisie de sorte que la diminution du signal de tension (2) par la charge capacitive de l'entrée (3) de l'amplificateur (1) en raison des seules propriétés capacitives du contenant (30) est - contrecarrée par l'augmentation du signal de tension (2) qui est causée par la rétroaction capacitive en raison de la seule deuxième capacité (22), la première électrode (11) et l'électrode (15) côté entrée de l'amplificateur du condensateur (24a) formant une deuxième électrode combinée (11 b) en forme de disque, qui est conformée en tant que conducteur (62a) en forme de bande sur une première face d'un circuit imprimé, et la deuxième électrode (12) et l'électrode (14) du condensateur (24a) coïncidant en formant une troisième électrode combinée (12b) qui est reliée avec la deuxième électrode combinée (11 b) de façon mécanique et rigide et qui présente une première plaque (60) en forme de disque laquelle est conformée en tant que piste conductrice sur l'autre face du circuit imprimé ainsi qu'une deuxième plaque (62) à évidement circulaire laquelle est située dans le plan de la deuxième électrode combinée (11b), entoure cette dernière de façon concentrique et est conformée en tant que piste conductrice sur la première face du circuit imprimé et disposée de façon concentrique par rapport à la première plaque (60).

13. Détecteur selon la revendication 12, **caractérisé en ce que** la deuxième électrode combinée (11 b) présente la forme d'un disque et que la troisième électrode combinée (12b) comprend une plaque arrière (60) en forme de disque et une plaque frontale évidée (62) qui, moyennant une pièce d'écartement (61) électroconductrice sous forme de cylindre creux, sont reliées entre elles de façon mécaniquement rigide et électriquement conductrice, la deuxième électrode combinée (11b) étant logée concentriquement dans l'évidement de la plaque frontale évidée (62) dans le même plan, la capacité de rétroaction fixe (24) étant formée essentiellement de la deuxième électrode combinée (11b) et de la plaque arrière (60), tandis que la capacité de compensation est formée essentiellement par la deuxième électrode combinée (11b) et la plaque frontale évidée (62).
